# FASCICULE DE BREVET EUROPEEN

(11) **EP 2 411 342 B1**
(45) Date de publication et mention de la délivrance du brevet: **14.03.2018**
(21) Numéro de dépôt: 10713482.7
(22) Date de dépôt: 23.03.2010
(51) Int. Cl.: C04B 28/04, C04B 40/00

(54) **BETON A HAUTE OU ULTRA HAUTE PERFORMANCE**
HOCH- ODER ULTRAHOCHLEISTUNGSBETON
HIGH- OR ULTRA-HIGH PERFORMANCE CONCRETE

(30) Priorité: 25.03.2009 FR 0901396
(43) Date de publication de la demande: 01.02.2012
(73) Titulaire: Lafarge, 75116 Paris (FR)
(72) Inventeur: FONOLLOSA, Philippe, F-38291 SAINT QUENTIN FALLAVIER (FR); BATOZ, Jean-François, F-38291 SAINT QUENTIN FALLAVIER (FR); CHEN, Jeffrey, F-38291 SAINT QUENTIN FALLAVIER (FR)
(74) Mandataire: Regimbeau
(86) Numéro de dépôt international: PCT/FR2010/000242
(87) Numéro de publication internationale: WO 2010/109095

(56) Documents cités:
- EP-A1- 0 744 387
- EP-A1- 1 958 926
- FR-A1- 2 866 330
- FR-A1- 2 921 358
- P.Rougeau,B.Borys: "Ultra High Performance Concrete with ultrafine particles other than silica fume" In: "Proceedings of the International Symposium on Ultra high Performance Concrete" 13 septembre 2004 (2004-09-13), M.Schmidt,E.Fehling, C.Geisenhanslüke , Kassel , XP002547061 vol. 3, , pages 213-225 figure 1; tableaux 1,2,3
- G.LONG,X.WANG,Y.XIE: "Very high performance concrete with ultrafine powders" CEMENT AND CONCRETE RESEARCH, vol. 32, 2002, pages 601-605, XP002547062
- J.FU,G.K.REYNOLDS,M.J.ADAMS,M.J.HOUNSLOW,A .D.SALMAN: "An experimental study of the impact breakage of wet granules" CEMENT ENGINEERING SCIENCE, vol. 60, 2005, pages 4005-4018, XP002547073

## Description

L'invention concerne un béton à haute ou ultra haute performance et à faible teneur en ciment Portland, ainsi que des procédés de préparation d'un tel béton et des mélanges utiles pour la préparation d'un tel béton.

Les développements technologiques des dernières années dans le domaine des bétons ont conduit à la mise au point de formulations cimentaires innovantes permettant d'obtenir des bétons à ultra haute performance en terme notamment de résistance à la compression. Ces formulations impliquent généralement le recours à des matériaux supplémentaires en plus du ciment et des granulats, qui sont par exemple des fibres, des adjuvants organiques ou des particules dites ultrafines, de taille généralement inférieure aux grains de ciment. En outre, les formulations de bétons classiques à haute ou ultra haute performance ont une teneur relativement élevée en ciment.

Or les procédés de fabrication du ciment, et plus particulièrement de son constituant primordial, le clinker, sont à l'origine de fortes émissions de dioxyde de carbone. La production de grains de clinker suppose en effet :
a) le préchauffage et la décarbonatation de la farine crue qui est obtenue par broyage des matières premières, que sont notamment le calcaire et l'argile ; et
b) la cuisson ou clinkérisation de la farine à une température d'environ 1500°C, suivie par un brusque refroidissement.

Ces deux étapes sont productrices de CO₂, d'une part en tant que produit direct de la décarbonatation et d'autre part en tant que produit secondaire de la combustion qui est mise en oeuvre à l'étape de cuisson pour fournir l'élévation en température.

Or les fortes émissions de dioxyde de carbone dans les procédés classiques de production de compositions cimentaires et de béton constituent un problème environnemental majeur, et, dans le contexte actuel, sont amenées à être fortement pénalisées sur le plan économique.

Il est également connu le document EP 1 958 926 décrivant un béton ultra hautes performances qui comprend en parties en poids: 100 de ciment Portland; 50-200 d'un sable ayant un seul classement avec un D10 à D90 entre 0,063 et 5 mm ou un mélange de sable ; 10 à 50 d'un matériau particulaire essentiellement non pouzzolanique; 0,1 à 10 de superplastifiant réducteur d'eau; et 10 à 30 d'eau; où le béton est sensiblement exempt de fumée de silice; ledit béton présentant une résistance à la compression supérieure à 100 MPa à 28 jours.

Il existe donc un fort besoin d'un procédé permettant de produire du béton à haute ou ultra haute performance avec des émissions associées de dioxyde de carbone réduites.

Dans ce but, la présente invention propose un mélange liant comprenant, en proportions massiques :
- de 0,2 à 25 % d'un matériau d'une classe granulométrique ultrafine dont les particules individuelles ont un D90 inférieur à 1 µm et/ou une surface spécifique BET supérieure à 5 m2/g ;
- de 8 à 25 % de ciment Portland sélectionné dont les particules ont un D90 inférieur à 30 µm ;
- de 25 à 40 % d'un matériau, différent du ciment, d'une classe granulométrique fine dont les particules ont un D10 et un D90 compris de 1 µm à 120 µm et une surface spécifique BET inférieure à 5 m2/g ; et
- de 20 à 60 % d'un matériau d'une classe granulométrique moyenne dont les particules ont un D10 et un D90 compris de 120 µm à 5 mm.

La présente invention a également pour objet une composition de béton, comprenant un mélange liant tel que défini précédemment, gâché avec de l'eau.

L'invention a également pour objet un procédé de préparation d'un béton selon l'invention comprenant une étape de gâchage du mélange liant selon l'invention avec de l'eau.

L'invention cherche à offrir au moins l'un des avantages déterminants décrits ci-après.

Avantageusement, la composition selon l'invention a une résistance mécanique élevée, supérieure ou égal à 50 MPa à court terme, en particulier après 48 heures.

L'invention permet de répondre au besoin de réduction des émissions de CO₂ jusqu'ici insatisfait par les bétons à haute ou ultra haute performance. En effet la quantité de ciment (et en particulier de clinker) utilisée dans le cadre de la présente invention est inférieure à celle qui est traditionnellement nécessaire pour les bétons à haute et ultra haute performance.

Le béton obtenu selon l'invention cherche également à offrir au moins l'un des avantages suivants :
- son comportement vis-à-vis de la corrosion des armatures du béton armé est au moins aussi bon que celui d'un béton à haute ou ultra haute performance classique ;
- sa porosité et sa perméabilité sont au moins du même ordre, voire plus faibles que celles d'un béton à haute ou ultra haute performance classique ; et
- sa résistance à la diffusion des chlorures est au moins du même ordre que celle d'un béton à haute ou ultra haute performance classique.

L'invention a pour avantage de pouvoir être mise en oeuvre dans plusieurs industries, notamment l'industrie du bâtiment, l'industrie chimique (adjuvantiers), l'ensemble des marchés de la construction (bâtiment, génie civil ou usine de préfabrication), l'industrie de la construction d'éléments ou l'industrie cimentière.

D'autres avantages et caractéristiques de l'invention apparaîtront clairement à la lecture de la description et des exemples donnés à titre purement illustratifs et non limitatifs qui vont suivre.

Par l'expression « liant hydraulique », on entend selon la présente invention un matériau pulvérulent qui, gâché avec de l'eau, forme une pâte qui fait prise et durcit par suite de réactions et de processus d'hydratation, et qui après durcissement, conserve sa résistance et sa stabilité même sous l'eau.

Par le terme « béton », on entend un mélange de liants hydrauliques, de granulats, d'eau, éventuellement d'additifs, et éventuellement d'additions minérales comme par exemple le béton haute performance, le béton ultra haute performance, le béton autoplaçant, le béton autonivelant, le béton autocompactant, le béton fibré, le béton prêt à l'emploi ou le béton coloré. Par le terme « béton », on entend également les bétons ayant subi une opération de finition telle que le béton bouchardé, le béton désactivé ou lavé, ou le béton poli. On entend également selon cette définition le béton précontraint. Le terme « béton » comprend les mortiers, dans ce cas précis le béton comprend un mélange de liant hydraulique, de sable, d'eau et éventuellement d'additifs. Le terme « béton » selon l'invention désigne indistinctement le béton frais ou le béton durci.

Par l'expression « béton haute performance », on entend un béton ayant une résistance à la compression à 28 jours de 50 MPa à 100 MPa. Par l'expression «béton ultra haute performance », on entend un béton ayant une résistance à la compression à 28 jours supérieure à 100 MPa et généralement supérieure à 120 MPa.

Selon l'invention, le terme « granulats » désigne, par exemple, des gravillons et/ou du sable.

Selon l'invention, l'expression « additions minérales » désigne un matériau minéral finement divisé utilisé dans le béton afin d'améliorer certaines propriétés ou pour lui conférer des propriétés particulières. Il s'agit, par exemple, de cendres volantes (telles que définies dans la norme EN 450), les laitiers (tels que définis dans la norme NF P 18-506), les additions calcaires (telles que définies dans la norme NF P 18-508) et les additions siliceuses (telles que définies dans la norme NF P 18-509).

Par l'expression « ciment Portland », on entend, par exemple, selon l'invention un ciment de type CEM I, CEM II, CEM III, CEM IV ou CEM V selon la norme « Ciment » NF EN 197-1.

Par l'expression « ciment Portland sélectionné », on entend, par exemple, selon l'invention un ciment Portland sur lequel une opération de préparation est effectuée pour conserver des particules d'une classe granulométrique donnée, par exemple un broyage plus poussé que celui effectué de façon générale pour obtenir un ciment Portland classique, une sélection ou une classification, par exemple par tamisage ou par sélection pneumatique.

Dans la suite de la description, sauf indication contraire, les proportions indiquées par des pourcentages correspondent à des proportions massiques.

La présente invention propose un mélange liant comprenant, en proportions massiques :
- de 0,2 à 25 % d'un matériau d'une classe granulométrique ultrafine dont les particules individuelles ont un D90 inférieur à 1 µm et/ou une surface spécifique BET supérieure à 5 m2/g ;
- de 8 à 25 % de ciment Portland sélectionné dont les particules ont un D90 inférieur à 30 µm ;
- de 25 à 40 % d'un matériau, différent du ciment, d'une classe granulométrique fine dont les particules ont un D10 et un D90 compris de 1 µm à 120 µm et une surface spécifique BET inférieure à 5 m2/g ; et
- de 20 à 60 % d'un matériau d'une classe granulométrique moyenne dont les particules ont un D10 et un D90 compris de 120 µm à 5 mm.

De façon avantageuse, le mélange liant comprend en proportions massiques :
- de 0,2 % à 25 % du matériau de la classe granulométrique ultrafine ;
- de 8 % à 25 % du ciment Portland sélectionné ;
- de 25 % à 40 % du matériau de la classe granulométrique fine ;
- de 20 % à 60 % du matériau de la classe granulométrique moyenne.

De façon avantageuse, le mélange comprend en proportions massiques :
- de 10 à 20 % du matériau de la classe granulométrique ultrafine ;
- de 10 à 20 % du ciment Portland sélectionné ;
- de 25 à 33 % du matériau de la classe granulométrique fine ; et
- de 35 à 55 % du matériau de la classe granulométrique moyenne.

Selon un exemple de réalisation, le mélange liant comprend, en outre, un matériau d'une classe granulométrique supérieure, comprenant des particules dont le D10 est supérieur à 5 mm.

Selon un exemple de réalisation, le mélange comprend en proportions massiques :
- de 0,2 % à 20 % du matériau de la classe granulométrique ultrafine ;
- de 8 % à 20 % du ciment Portland sélectionné ;
- de 25 % à 32 % du matériau de la classe granulométrique fine ; et
- de 20 % à 48 % du matériau de la classe granulométrique moyenne ; et
- de 20 % à 60 %, du matériau de la classe granulométrique supérieure.

Les matériaux qui composent le mélange ci-dessus sont présents sous forme de particules, c'est-à-dire d'éléments unitaires de matériaux. La distribution de la taille des particules permet d'établir une division des constituants en plusieurs « classes granulométriques », c'est-à-dire en compartiments sensiblement disjoints.

Ainsi, la classe granulométrique ultrafine comprend :
(i) des particules de D90 inférieur à 1 µm ; ou
(ii) des particules de surface spécifique BET supérieure à 5 m²/g ; ou
(iii) des particules de D90 inférieur à 1 µm et de surface spécifique BET supérieure à 5 m²/g.

La classe granulométrique fine correspond à un ensemble de particules dont le D10 et le D90 sont compris de 1 µm à 120 µm et dont la surface spécifique BET est inférieure à 5 m²/g. La classe granulométrique moyenne correspond à un ensemble de particules dont le D10 et le D90 sont compris de 120 µm à 5 mm. Et la classe granulométrique supérieure correspond à un ensemble de particules dont le D10 est supérieur à 5 mm.

Le D90, également noté D_{V}90, correspond au 90^{ème} centile de la distribution en volume de taille des particules, c'est-à-dire que 90 % des particules ont une taille inférieure au D90 et 10 % ont une taille supérieure au D90. De même, le D10, également noté D_{V}10, correspond au 10^{ème} centile de la distribution en volume de taille des particules, c'est-à-dire que 10 % des particules ont une taille inférieure au D10 et 90 % ont une taille supérieure au D10.

En d'autres termes : au moins 80 % des particules de la classe granulométrique fine (de préférence au moins 90 %, de manière particulièrement préférée au moins 95 % voire au moins 99 %) ont une taille comprise de 1 µm à 120 µm ; au moins 80 % des particules de la classe granulométrique moyenne (de préférence au moins 90 %, de manière particulièrement préférée au moins 95 % voire au moins 99 %) ont une taille comprise de 120 µm à 5 mm ; au moins 90 % des particules de la classe granulométrique supérieure (de préférence au moins 95 % voire au moins 99 %) ont une taille supérieure à 5 mm ; et, selon les modes de réalisation correspondant aux cas (i) et (iii) ci-dessus, au moins 90 % des particules de la classe granulométrique ultrafine (de préférence au moins 95 %, de manière particulièrement préférée au moins 99 %) ont une taille inférieure à 1 µm. Les quatre classes granulométriques (ultrafine, fine, moyenne et supérieure) correspondent alors à des compartiments de taille sensiblement disjoints.

Le D10 ou le D90 d'un ensemble de particules peut être généralement déterminé par granulométrie laser pour les particules de taille inférieure à 63 µm, ou par tamisage pour les particules de taille supérieure à 63 µm.

La surface spécifique BET est une mesure de la surface réelle totale des particules, qui tient compte de la présence de reliefs, d'irrégularités, de cavités superficielles ou internes, de porosité.

Selon un mode de réalisation alternatif, il peut y avoir un recouvrement entre les tailles des particules des classes fine et ultrafine, c'est-à-dire que plus de 10 % des particules respectivement des classes ultrafine et fine peuvent se situer dans une même gamme de taille.

Un exemple de cas où les classes ultrafine et fine se distinguent uniquement par la surface spécifique BET et non par la taille des particules peut être celui où les ultrafines sont constituées de broyats de liant hydraulique hydraté. Dans cet exemple, les ultrafines peuvent avoir une taille de l'ordre de 10 µm, pour une surface spécifique qui peut être de l'ordre de 100 m²/g (en raison de la porosité de ce matériau).

Selon un mode de réalisation, l'ensemble constitué par le ciment et la classe granulométrique fine comprend des particules dont le D10 et le D90 sont compris de 1 à 20 µm. En d'autres termes, selon ce mode de réalisation, au moins 80 % des particules de ciment ou du matériau de la classe granulométrique fine (de préférence au moins 90 %, de manière tout particulièrement préférée au moins 95 % voire au moins 99 %) ont une taille comprise de 1 à 20 µm. Ce mode de réalisation correspond au cas où le profil de distribution granulométrique comprend une discontinuité : le mélange ne comprend sensiblement pas de particules de diamètre compris de 20 à 120 µm.

Les différents modes de réalisation décrits ci-dessus correspondent à des modes d'empilement de grains ou de particules optimisés. Les mélanges liants sont destinés à être mélangés avec des matériaux de classe granulométrique supérieure avant ou au moment de la préparation du béton.

Dans les compositions telles que définies ci-dessus, le ciment est du ciment Portland choisi parmi les ciments Portland de type CPA (Ciment Portland Artificiel), et notamment parmi les ciments décrits dans la norme européenne EN 197-1. On pourra utiliser par exemple un ciment CEM1 ou CEM2 52.5 N ou R ou PM (Prise Mer) ou PMES (Prise Mer Eau Sulfatée). Le ciment peut être du type HRI (à Haute Résistance Initiale). Dans certains cas, notamment pour le type CEM2, le ciment Portland n'est pas constitué de clinker pur mais est fourni mélangé avec au moins un matériau supplémentaire (par exemple laitier, pouzzolane, cendres volantes, schiste calciné ou calcaire), en une quantité allant jusqu'à 37%. Dans ces cas-là, les quantités de ciment énoncées ci-dessus correspondent plus particulièrement aux quantités de clinker, tandis que les matériaux supplémentaires sont comptabilisés parmi la classe granulométrique appropriée.

La classe granulométrique supérieure peut, par exemple, comprendre des gravillons et/ou graviers et/ou cailloux.

La classe granulométrique moyenne peut, par exemple, comprendre du sable ou du sablon.

La classe granulométrique fine peut, par exemple, comprendre un ou plusieurs matériaux choisis parmi les cendres volantes, les pouzzolanes (naturelles et artificielles), les poudres calcaires, les poudres siliceuses, la chaux, le sulfate de calcium (en particulier le gypse sous forme anhydre ou semi hydratée) et les laitiers.

Le terme anglais « fillers » est parfois employé pour désigner la plupart des matériaux de la classe granulométrique fine.

La classe granulométrique ultrafine peut, par exemple, comprendre un matériau choisi parmi le groupe composé des poudres calcaires, des carbonates précipités, des pouzzolanes naturelles et artificielles, des pierres ponces, des cendres volantes broyées, des broyats de liant hydraulique silicique hydraté ou carbonaté, et des mélanges ou co-broyages de ceux-ci, sous forme sèche. En particulier, le matériau de la classe granulométrique ultrafine ne comprend sensiblement pas de fumée de silice. Par l'expression « sensiblement pas », on entend que la quantité de fumée de silice est inférieure à 1 % en poids de la masse totale du matériau de la classe granulométrique ultrafine.

Le terme « broyats de liant hydraulique silicique hydraté » désigne notamment les produits décrits dans le document FR 2708592.

Un agent fluidifiant ou superplastifiant peut avantageusement être ajouté dans un mélange liant selon l'invention, de préférence à une concentration de 0,05 % à 3 %, de préférence de 0,5 % à 2 %, exprimée en rapport massique d'extrait sec de l'agent fluidifiant sur la masse de mélange liant. La quantité d'agent est aussi déterminée en fonction de la qualité souhaitée pour la pâte, notamment si on souhaite que le béton soit autoplaçant ou non. Des mesures d'étalement permettent de déterminer le type et la quantité de superplastifiant à utiliser dans la formulation.

Par le terme « superplastifiant », on entend selon la présente invention à la fois les réducteurs d'eau et les superplastifiants tels que décrits dans l'ouvrage intitulé « Concrete Admixtures Handbook, Properties Science and Technology», V.S. Ramachandran, Noyes Publications, 1984.

Un réducteur d'eau est défini comme un additif qui réduit la quantité d'eau de mélange pour un béton pour une ouvrabilité donnée typiquement de 10 à 15 %. Les réducteurs d'eau comprennent, par exemple, les lignosulphonates, les acides hydroxycarboxyliques, les hydrates de carbone, et d'autres composés organiques spécialisés, par exemple le glycérol, l'alcool polyvinylique, le sodium alumino-méthyl-siliconate, l'acide sulfanilique et la caséine.

Les superplastifiants appartiennent à une nouvelle classe de réducteurs d'eau chimiquement différente des réducteurs d'eau normaux et capables de réduire la quantité d'eau de mélange de 30 %. Les superplastifiants ont été de façon générale classés en quatre groupes : condensat de naphtalène formaldéhyde sulfoné (ou SNF, acronyme anglais pour sulphonated naphthalene formaldehyde condensate) (généralement un sel de sodium) ; ou condensat de mélamine formaldéhyde sulfoné (ou SMF, acronyme anglais pour sulphonated melamine formaldehyde condensate) ; des lignosulfonates modifiés (ou MLS, acronyme anglais pour modified lignosulfonates) ; et d'autres. Des superplastifiants de nouvelle génération comprennent des composés de type dispersants à structure peigne. Ces dispersants portent des fonctions ioniques de type carboxylique et/ou sulfonique et/ou phosphonique, de préférence carboxylique, et des chaînons pendants de type polyéthylène glycol, polypropylène glycol, copolymère ou autre chaînon de préférence hydrosoluble. La quantité de superplastifiant requise dépend de façon générale de la réactivité du ciment. Plus la réactivité du ciment est faible, plus la quantité requise de superplastifiant est faible. De façon à réduire la quantité totale d'alcalins, le superplastifiant peut être utilisé sous la forme d'un sel de calcium plutôt que d'un sel de sodium.

D'autres additifs ou adjuvants connus peuvent également être utilisés dans le cadre de l'invention, par exemple un agent anti-mousse (par exemple le polydiméthylsiloxane). Ils peuvent également comprendre des silicones sous la forme d'une solution, d'un solide ou de préférence sous la forme d'une résine, d'une huile ou d'une émulsion, de préférence dans l'eau. Des silicones plus particulièrement adaptées comprennent les groupes caractéristiques (RSiO0.5) et (R2SiO). Dans ces formules, les radicaux R, qui peuvent être identiques ou différents, sont de préférence l'hydrogène ou un groupe alkyle, de 1 à 8 atomes de carbone, le groupe méthyle étant le préféré. Le nombre de groupes caractéristiques est de préférence compris de 30 à 120.

Le mélange selon l'invention peut comprendre un agent viscosant et/ou un agent de modification de la limite d'écoulement (généralement pour accroître la viscosité et/ou la limite d'écoulement). De tels agents comprennent : les dérivés de cellulose, par exemple des éthers de cellulose solubles dans l'eau, tels que les éthers de carboxyméthyl, méthyl, éthyl, hydroxyéthyl et hydroxypropyl de sodium ; les alginates ; et le xanthane, la carraghénine ou la gomme de guar. Un mélange de ces agents peut être utilisé.

Le mélange selon l'invention peut comprendre un agent activateur qui permet de favoriser les réactions d'hydratation des matériaux vitreux. De tels agents comprennent des sels sodique et/ou calcique.

Le mélange selon l'invention peut comprendre un accélérateur et/ou un agent entraîneur d'air et/ou un retardateur.

Le mélange peut comprendre des fibres, par exemple des fibres métalliques, des fibres organiques ou des fibres de verre ou une combinaison de celles-ci.

Le béton selon l'invention est préparé en gâchant les mélanges liants ci-dessus avec de l'eau. Le béton peut également être préparé en gâchant directement les différents ingrédients des mélanges liants ci-dessus entre eux et avec de l'eau, dans les proportions suivantes :
- de 10 à 550 kg/m³ du matériau de la classe granulométrique ultrafine ;
- de 130 à 450 kg/m³ de ciment Portland sélectionné ;
- de 200 à 800 kg/m³ du matériau de la classe granulométrique fine ;
- de 500 à 1300 kg/m³ du matériau de la classe granulométrique moyenne ; et
- de 150 à 300 l/m³ d'eau.

On entend par « kg/m³ » la masse de matériaux à utiliser par m³ de béton frais produit.

Les matériaux en question présentent, selon des modes de réalisations particuliers, les mêmes caractéristiques que celles qui ont été décrites ci-dessus en relation avec les mélanges liants selon l'invention.

Le rapport E/L, où E désigne la quantité d'eau et L la quantité de liant (matériaux de l'ensemble (ciment Portland + classes granulométriques ultrafine et fine)), se situe typiquement de 0,1 à 0,5, de préférence de 0,13 à 0,30. En revanche, le rapport E/C, où E désigne la quantité d'eau et C la quantité de ciment, est plus grand que dans le cas du béton à haute ou ultra haute performance classique et ce en raison de la faible quantité de ciment qui est présente. Le rapport E/C est de préférence compris de 0.2 à 2, de préférence de 0,5 à 1.

Les ratios E/C et E/L sont notamment ajustés en fonction de la quantité de ciment et les propriétés mécaniques finales recherchées. A quantité de ciment plus faible, le ratio sera aussi relativement plus faible. L'homme du métier, par des tests de routine, saura déterminer la quantité d'eau en fonction de la quantité de ciment, fines et ultra-fines de la composition, en fonction de mesures de résistance à la compression des échantillons.

Selon un mode de réalisation avantageux du procédé de préparation d'une composition de béton selon l'invention, la quantité d'eau utilisée est de 150 à 300 l/m³, de préférence de 180 à 250 l/m³.

Le béton peut être renforcé, par exemple par des armatures métalliques.

Le béton peut être pré-tendu, par des câbles ou des tendons adhérents, ou post-tendu, par des câbles ou des tendons ou des gaines ou des barres non adhérents.

La précontrainte, sous la forme de pré-tension ou post-tension, est particulièrement adaptée aux produits fabriqués selon la présent invention.

Selon un mode de réalisation, les compositions de béton formulées selon l'invention sont le résultat d'une optimisation complexe des différents paramètres entrant en jeu (choix des matériaux et concentration de ceux-ci) afin de garantir un empilement optimisé (choix de la granulométrie et choix de l'adjuvantation), une chimie de l'hydratation optimisée (en effet de nombreux composants participent à la réaction : par exemple, poudre calcaire ou cendres volantes) et une demande en eau optimisée.

Les compositions de béton obtenues selon l'invention présentent une résistance à la compression supérieure ou égale à 50 MPa 48h après le gâchage et/ou supérieure ou égale à 100 MPa 28 jours après le gâchage, et/ou supérieure ou égale à 120 MPa après le gâchage et après un traitement thermique, par exemple 2 jours à 20°C après la prise puis 2 jours à 90°C.

Les différents buts et avantages de l'invention sont obtenus grâce à une optimisation poussée de l'ensemble des paramètres de formulation, et notamment grâce à :
- la mise au point d'un mélange liant présentant une compartimentation des matériaux en classes granulométriques sensiblement disjointes, notamment en une classe fine, une classe moyenne, une classe supérieure, et une classe ultrafine, ce qui permet une optimisation de l'empilement des différentes particules ;
- la présence, en plus du ciment, de matériaux liants non cimentaires appartenant à la classe granulométrique fine, qui peuvent être majoritaires par rapport au ciment et dont le choix et les proportions sont optimisés ;
- l'utilisation d'ultrafines, et notamment d'éléments à réaction pouzzolanique, susceptibles de participer à la fonction de liaison hydraulique ;
- l'ajustement de la demande en eau ; et
- l'optimisation des différents adjuvants.

De préférence, les bétons selon l'invention sont des bétons fluides ou autoplaçants (autocompactants ou autonivelants).

Le béton selon l'invention peut être préparé selon des procédés connus de l'homme du métier, comprenant le mélange des composants solides et de l'eau, la mise en forme (par exemple moulage, coulage, injection, pompage, extrusion ou calandrage) et durcissement.

L'invention concerne, en outre, un objet en béton durci, comprenant :
- de 10 à 200 kg/m³, de préférence de 20 à 100 kg/m³, du matériau de la classe granulométrique ultrafine telle que définie ci-dessus ;
- des hydrates de ciment Portland sélectionné en une quantité correspondant à une quantité de ciment Portland de 130 à 350 kg/m³, de préférence de 150 à 300 kg/m³ ;
- de 200 à 600 kg/m³, de préférence de 300 à 500 kg/m³, du matériau de la classe granulométrique fine telle que définie ci-dessus ;
- de 500 à 800 kg/m³, de préférence de 500 à 700 kg/m³, du matériau de la classe granulométrique moyenne telle que définie ci-dessus ; et
- de 500 à 1300 kg/m³, de préférence de 800 à 1100 kg/m³, du matériau de la classe granulométrique supérieure telle que définie ci-dessus.

L'invention concerne, en outre, un procédé de préparation d'une composition de béton comprenant une étape de gâchage d'un mélange selon l'invention avec de l'eau.

L'invention concerne par ailleurs un procédé de préparation d'une composition de béton comprenant une étape de gâchage d'un mélange liant selon l'invention avec le matériau de classe granulométrique supérieure telle que définie ci-dessus et de l'eau.

L'invention concerne par ailleurs un procédé de préparation d'une composition de béton comprenant une étape de gâchage de :
- de 10 à 200 kg/m³, de préférence de 20 à 100 kg/m³, du matériau de la classe granulométrique ultrafine telle que définie ci-dessus ;
- de 130 à 350 kg/m³, de préférence de 150 à 300 kg/m³ de ciment Portland sélectionné ;
- de 200 à 600 kg/m³, de préférence de 300 à 500 kg/m³, du matériau de la classe granulométrique fine telle que définie ci-dessus ;
- de 500 à 800 kg/m³, de préférence de 500 à 700 kg/m³, du matériau de la classe granulométrique moyenne telle que définie ci-dessus ; et
- éventuellement, un agent fluidifiant et/ou un accélérateur et/ou un agent entraîneur d'air et/ou un agent viscosant et/ou un retardateur ; avec
- de l'eau.

Selon un mode de réalisation avantageux du procédé de préparation d'une composition de béton selon l'invention, la quantité d'eau utilisée est de 150 à 300 l/m³, de préférence de 180 à 250 l/m³.

Le béton peut être sujet à un traitement thermique après la prise pour améliorer ses propriétés mécaniques. Le traitement après prise, appelé également la cure du béton, est de façon générale réalisé à une température depuis la température ambiante (par exemple de 20° C à 90° C), de préférence de 60° C à 90° C. La température du traitement doit être inférieure à la température d'ébullition de l'eau à la pression ambiante. La température du traitement thermique après prise est généralement inférieure à 100°C. La mise du béton dans un autoclave dans lequel le traitement thermique est réalisé à des pressions élevées permet l'utilisation de températures de cure plus élevées.

La durée du traitement thermique après prise peut être, par exemple, de 6 heures à 4 jours, de préférence d'environ 2 jours. On commence le traitement thermique après la prise, de façon générale au moins un jour après que la prise a commencé et de préférence sur du béton âgé de 1 à 7 jours à 20°C.

Le traitement thermique peut être réalisé dans des environnements secs ou humides ou selon des cycles qui alternent les deux environnements, par exemple, un traitement de 24 heures dans un environnement humide suivi d'un traitement de 24 heures dans un environnement sec.

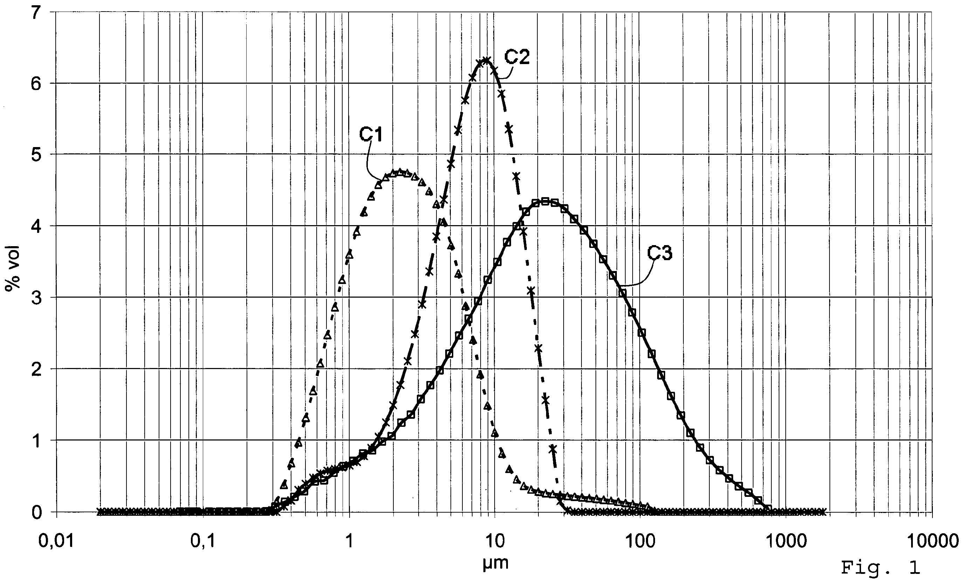

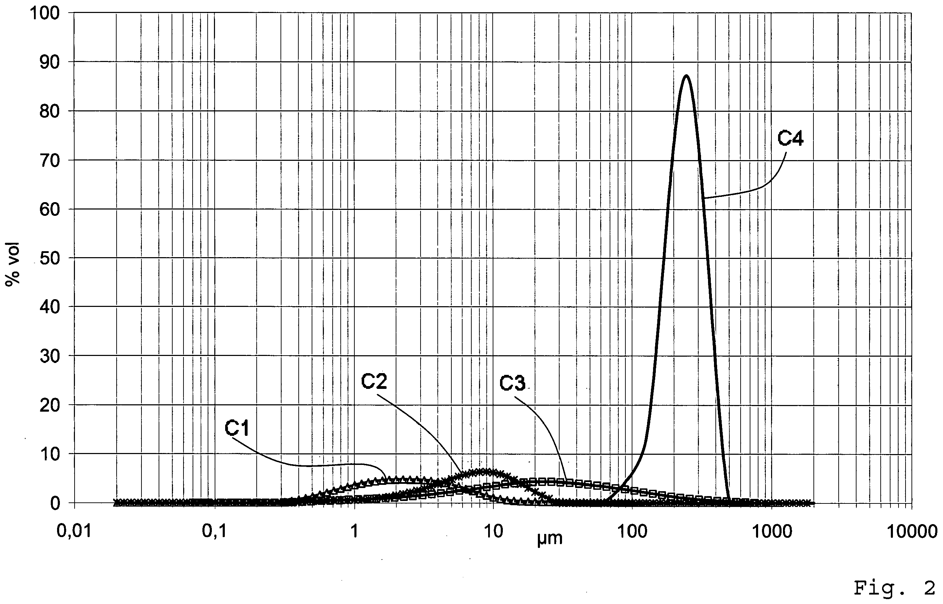

Les figures 1 et 2 représentent les profils de distribution granulométrique de divers matériaux utilisés pour préparer un exemple de réalisation d'un mélange liant sec selon l'invention ainsi que le bétons gâché associé. En abscisse figure la taille en µm, et en ordonnée le pourcentage volumique.

Les méthodes de mesures suivantes ont été utilisées :

### Méthode de granulométrie laser

Les courbes granulométriques des différentes poudres sont obtenues à partir d'un granulomètre laser Malvern MS2000. La mesure s'effectue dans un milieu approprié (par exemple, en milieu aqueux) ; la taille des particules doit être comprise de 0,02 µm à 2 mm. La source lumineuse est constituée par un laser rouge He-Ne (632 nm) et une diode bleue (466 nm). Le modèle optique est celui de Fraunhofer, la matrice de calcul est de type polydisperse.

Une mesure de bruit de fond est d'abord effectuée avec une vitesse de pompe de 2000 tr/min, une vitesse d'agitateur de 800 tr/min et une mesure du bruit sur 10 s, en l'absence d'ultrasons. On vérifie alors que l'intensité lumineuse du laser est au moins égale à 80%, et que l'on obtient une courbe exponentielle décroissante pour le bruit de fond. Si ce n'est pas le cas, les lentilles de la cellule doivent être nettoyées.

On effectue ensuite une première mesure sur l'échantillon avec les paramètres suivants : vitesse de pompe de 2000 tr/min, vitesse d'agitateur de 800 tr/min, absence d'ultrasons, limite d'obscuration entre 10 et 20 %. L'échantillon est introduit pour avoir une obscuration légèrement supérieure à 10 %. Après stabilisation de l'obscuration, la mesure est effectuée avec une durée entre l'immersion et la mesure fixée à 10 s. La durée de mesure est de 30 s (30000 images de diffraction analysées). Dans le granulogramme obtenu, il faut tenir compte du fait qu'une partie de la population de la poudre peut être agglomérée.

On effectue ensuite une seconde mesure (sans vidanger la cuve) avec des ultrasons. La vitesse de pompe est portée à 2500 tr/min, l'agitation à 1000 tr/min, les ultrasons sont émis à 100 % (30 watts). Ce régime est maintenu pendant 3 minutes, puis on revient aux paramètres initiaux : vitesse de pompe de 2000 tr/min, vitesse d'agitateur de 800 tr/min, absence d'ultrasons. Au bout de 10 s (pour évacuer les bulles d'air éventuelles), on effectue une mesure de 30 s (30000 images analysées). Cette seconde mesure correspond à une poudre désagglomérée par dispersion ultrasonique.

Chaque mesure est répétée au moins deux fois pour vérifier la stabilité du résultat. L'appareil est étalonné avant chaque séance de travail au moyen d'un échantillon standard (silice C10 Sifraco) dont la courbe granulométrique est connue. Toutes les mesures présentées dans la description et les gammes annoncées correspondent aux valeurs obtenues avec ultrasons.

### Méthode de mesure de la surface spécifique BET

La surface spécifique des différentes poudres est mesurée comme suit. On prélève un échantillon de poudre de masse suivante : 0,1 à 0,2 g pour une surface spécifique estimée à plus de 30 m²/g ; 0,3 g pour une surface spécifique estimée à 10-30 m²/g ; 1 g pour une surface spécifique estimée à 3-10 m²/g ; 1,5 g pour une surface spécifique estimée à 2-3 m²/g ; 2 g pour une surface spécifique estimée à 1.5-2 m²/g ; 3 g pour une surface spécifique estimée à 1-1,5 m²/g.

On utilise une cellule de 3 cm³ ou de 9 cm³ selon le volume de l'échantillon. On pèse l'ensemble de la cellule de mesure (cellule + tige en verre). Puis on ajoute l'échantillon dans la cellule : le produit ne doit pas être à moins d'un millimètre du haut de l'étranglement de la cellule. On pèse l'ensemble (cellule + tige en verre + échantillon). On met en place la cellule de mesure sur un poste de dégazage et on dégaze l'échantillon. Les paramètres de dégazage sont de 30 min / 45°C pour le ciment Portland, le gypse, les pouzzolanes ; de 3 h / 200°C pour les laitiers, cendres volantes, ciment alumineux, calcaire ; et de 4 h / 300°C pour l'alumine de contrôle. La cellule est rapidement bouchée avec un bouchon après le dégazage. On pèse l'ensemble et on note le résultat. Toutes les pesées sont effectuées sans le bouchon, celui-ci étant temporairement retiré pour faire la mesure. La masse de l'échantillon est obtenue par soustraction de la masse de la cellule à la somme des masses de la cellule et de l'échantillon dégazé.

On effectue ensuite l'analyse de l'échantillon après l'avoir mis en place sur le poste de mesure. L'analyseur est le SA 3100 de Beckman Coulter. La mesure repose sur l'adsorption d'azote par l'échantillon à une température donnée, ici la température de l'azote liquide soit environ -196°C. L'appareil mesure la pression de la cellule de référence dans laquelle l'adsorbat est à sa pression de vapeur saturante et celle de la cellule de l'échantillon dans laquelle des volumes connus d'adsorbat sont injectés. La courbe résultant de ces mesures est l'isotherme d'adsorption. Dans le processus de mesure, la connaissance du volume mort de la cellule est nécessaire : une mesure de ce volume est donc réalisée avec de l'hélium avant l'analyse.

La masse de l'échantillon calculée précédemment est entrée en tant que paramètre. La surface BET est déterminée par le logiciel par régression linéaire à partir de la courbe expérimentale. L'écart-type de reproductibilité obtenu à partir de 10 mesures sur une silice de surface spécifique 21,4 m²/g est de 0,07. L'écart-type de reproductibilité obtenu à partir de 10 mesures sur un ciment de surface spécifique 0,9 m²/g est de 0,02. Une fois toutes les deux semaines un contrôle est effectué sur un produit de référence. Deux fois par an, un contrôle est réalisé avec l'alumine de référence fournie par le constructeur.

### Méthode de mesure de la résistance de compression

Quelle que soit l'échéance, la résistance de compression est mesurée sur un échantillon cylindrique ayant un diamètre de 7 cm et une hauteur de 14 cm, la force appliquée à l'échantillon est augmentée à un taux de 3.85 kN/sec durant le test de compression.

### Méthode de mesure de l'étalement

L'étalement (dynamique, avec chocs - normalement 20 - à intervalles d'environ 1 seconde, ou statique, sans choc) est mesuré sur un table à chocs circulaire (diamètre 300 mm, épaisseur 5.9 mm, masse d'environ 4.1 kg) avec une chute d'environ 12 mm. Des échantillons de test (500 ml) sont préparés en utilisant un moule tronconique ayant une hauteur de 50 mm, un diamètre supérieure de 70 mm, un diamètre inférieure de 100 mm. L'étalement statique (sans choc) est mesuré après que l'échantillon a cessé de s'écouler après le démoulage.

### Exemples

La présente invention est décrite par les exemples qui suivent non limitatifs. Dans ces exemples, les matériaux utilisés sont disponibles auprès des fournisseurs suivants :

| | |
|---|---|
| Durcal 1 | Omya, France |
| Superplastifiant F2 | Chryso, France |
| Ciment HTS, Le Teil | Lafarge France |
| Sable Be01 | Sifraco, France |
| Cendres volantes de Carling, Tranche 6 | Surchiste, France |

Le Durcal 1 correspond au matériau de classe granulométrique ultrafine. Il a un D10 de 0,8 µm, un D90 de 8 µm et une surface spécifique BET d'environ 5,61 m²/g. Les cendres volantes de Carling, Tranche 6, correspondent au matériau de classe granulométrique fine. Elles ont un D10 de 2,7 µm et un D90 de 116 µm Le ciment Portland (ciment HTS, Le Teil) sélecté a un D10 de 2,1 µm et un D90 de 16,6µm. Le sable Be01 correspond au matériau de classe granulométrique moyenne. Le sable Be01 a un D90 d'environ 300 µm et un D10 d'environ 200 µm.

On a préparé un ciment par classification pneumatique en utilisant un séparateur ALPINE 50 ATP. Le principe consiste à séparer une population de départ en 2 fractions (voire 3 si on considère les ultra fines à part) : une fraction formée des plus grosses particules du produit de départ, appelée les rejets, et une fraction formée des plus fines particules du produit de départ. La vitesse de rotation du sélecteur ainsi que le débit d'air ont été réglés de façon à obtenir une séparation des particules à 20µm.

La figure 1 représente les profils de distribution granulométrique du ciment et des matériaux des classes granulométriques ultrafine et fine utilisés pour préparer le présent exemple de réalisation d'un mélange liant sec selon l'invention. La figure 2 représente les profils de distribution granulométrique du ciment et des matériaux des classes granulométriques ultrafine, fine et moyenne utilisés pour préparer le présent exemple de réalisation d'un mélange liant sec. Sur ces figures, la courbe C1 correspond au profil de distribution granulométrique du Durcal 1, la courbe C2 correspond au profil de distribution granulométrique du Ciment, la courbe C3 correspond au profil de distribution granulométrique des cendres volantes et la courbe C4 correspond au profil de distribution granulométrique du sable Be01.

Le profil de distribution granulométrique des matériaux utilisés (tel que déterminé par granulométrie laser pour les particules de taille moyenne inférieure à 63 µm et par tamisage pour les particules de taille moyenne supérieure à 63 µm) est représenté dans la figure 1 et met en évidence la compartimentation des matériaux en classes granulométriques disjointes.

### Exemple 1

Un exemple de réalisation de béton frais selon la présente invention a été réalisé selon la formulation suivante :

| | Composition relative en masse |
|---|---|
| Ciment sélectionné (HTS) | 1,00 |
| Filler (Durcal 1) | 0,86 |
| Cendre volante | 2,48 |
| Sable (Be01) | 3,91 |
| Superplastifiant (F2) | 0,097 |
| E/L | 0,158 |

Le mélange a été réalisé dans un malaxeur de type Rayneri. Lorsqu'un traitement thermique est prévu, celui-ci consiste à attendre 24 heures à 20°C après la prise puis à maintenir le béton pendant 48 h à 90°C.

La composition de béton après prise a les propriétés suivantes :

| | |
|---|---|
| Etalement sans chocs à 13 min (mm) | 275 |
| Compression à 48h (MPa) | 76,7 |
| Compression à 28 jours sans traitement thermique (MPa) | 116 |
| Compression après traitement thermique (MPa) | 147 |

## Revendications

1. Mélange liant comprenant en proportions massiques :
- de 0,2 à 25 % d'un matériau d'une classe granulométrique ultrafine dont les particules individuelles ont un D90 inférieur à 1 µm et/ou une surface spécifique BET supérieure à 5 m²/g ;
- de 8 à 25 % de ciment Portland sélectionné dont les particules ont un D90 inférieur à 30 µm ;
- de 25 à 40 % d'un matériau, différent du ciment, d'une classe granulométrique fine dont les particules ont un D10 et un D90 compris de 1 µm à 120 µm et une surface spécifique BET inférieure à 5 m²/g ; et
- de 20 à 60 % d'un matériau d'une classe granulométrique moyenne dont les particules ont un D10 et un D90 compris de 120 µm à 5 mm.

2. Mélange liant selon la revendication 1, dans lequel le matériau de classe granulométrique ultrafine ne comprend sensiblement pas de fumée de silice.

3. Mélange liant selon la revendication 1, comprenant en proportions massiques :
- de 10 à 20 % du matériau de la classe granulométrique ultrafine ;
- de 10 à 20 % du ciment Portland sélectionné ;
- de 25 à 33 % du matériau de la classe granulométrique fine ; et
- de 35 à 55 % du matériau de la classe granulométrique moyenne.

4. Mélange liant selon l'une quelconque des revendications 1 à 3, comprenant, en outre, un matériau d'une classe granulométrique supérieure, dont les particules ont un D10 supérieur à 5 mm.

5. Mélange liant selon l'une quelconque des revendications 1 à 4, comprenant, en outre, un agent fluidifiant, la proportion de l'agent fluidifiant étant de 0,05 à 3 % exprimée en rapport massique d'extrait sec de l'agent fluidifiant sur la masse de pré-mélange liant.

6. Composition de béton, comprenant un mélange liant selon l'une des revendications 1 à 5 et de l'eau.

## Patentansprüche

1. Bindemittelmischung, umfassend in Massenanteilen:
- 0,2 bis 25 % eines Materials einer ultrafeinen Korngrößenklasse, dessen einzelne Partikel einen D90 unter 1 µm und/oder eine spezifische Fläche BET über 5 m²/g haben;
- 8 bis 25 % ausgewählten Portlandzement, dessen Partikel einen D90 unter 30 µm haben;
- 25 bis 40 % eines Materials, das sich von Zement unterscheidet, einer feinen Korngrößenklasse, dessen Partikel einen D10 und einen D90 von 1 µm bis 120 µm inklusive und eine spezifische Fläche BET unter 5 m²/g haben; und
- 20 bis 60 % eines Materials einer mittleren Korngrößenklasse, dessen Partikel einen D10 und einen D90 von 120 µm bis 5 mm inklusive haben.

2. Bindemittelmischung nach Anspruch 1, wobei das Material ultrafeiner Korngrößenklasse etwa keinen Quarzstaub umfasst.

3. Bindemittelmischung nach Anspruch 1, umfassend in Massenanteilen:
- 10 bis 20 % des Materials der ultrafeinen Korngrößenklasse;
- 10 bis 20 % des ausgewählten Portlandzements;
- 25 bis 33 % des Materials der feinen Korngrößenklasse; und
- 35 bis 55 % des Materials der mittleren Korngrößenklasse.

4. Bindemittelmischung nach einem der Ansprüche 1 bis 3, umfassend ferner ein Material einer hohen Korngrößenklasse, dessen Partikel einen D10 über 5 mm haben.

5. Bindemittelmischung nach einem der Ansprüche 1 bis 4, umfassend ferner ein fluidifizierendes Mittel, wobei der Anteil des fluidifizierenden Mittels 0,05 bis 3%, ausgedrückt in Massenanteil Trockenextrakt des fluidifizierenden Mittels zur Masse der Bindemittelvormischung, beträgt.

6. Betonzusammensetzung, umfassend eine Bindemittelmischung nach einem der Ansprüche 1 bis 5 und Wasser.

## Claims

1. A binder mix, comprising in mass proportions:
- from 0.2% to 25% of a material of an ultrafine particle size category, the individual particles of which have a D90 value less than 1 µm and/or a BET specific surface greater than 5 m²/g;
- from 8% to 25% of selected Portland cement, the particles of which have a D90 value less than 30 µm;
- from 25% to 40% of a material, other than the cement, of a fine particle size category, the particles of which have a D10 and D90 value from 1 µm to 120 µm and a BET specific surface less than 5 m²/g; and
- from 20% to 60% of a material of a medium particle size category, the particles of which have a D10 and D90 value from 120 µm to 5 mm.

2. The binder mix according to claim 1, wherein the material of ultrafine particle size category does not substantially comprise silica fume.

3. The binder mix according to claim 1, comprising in mass proportions:
- from 10% to 20% of the material of the ultrafine particle size category;
- from 10% to 20% of the selected Portland cement;
- from 25% to 33% of the material of the fine particle size category; and
- from 35% to 55% of the material of the medium particle size category.

4. The binder mix according to any one of claims 1 to 3, further comprising a material of a higher particle size category, the particles of which have a D10 value greater than 5 mm.

5. The binder mix according to any one of claims 1 to 4, further comprising a fluidizing agent, the proportion of the fluidizing agent being from 0.05% to 3%, expressed as a mass ratio of dry extract of the fluidizing agent to the mass of binder premix.

6. A concrete composition, comprising a binder mix according to one of claims 1 to 5 and water.
